# EUROPÄISCHE PATENTANMELDUNG

(11) **EP 0 648 848 A1**
(43) Veröffentlichungstag der Anmeldung: **19.04.1995**
(21) Anmeldenummer: 94112481.0
(22) Anmeldetag: 10.08.1994
(51) Int. Cl.: C22B 7/00

(54) **Verfahren zur Wiedergewinnung von Platinmetallen aus Fahrzeugabgaskatalysatoren**

(30) Priorität: 21.09.1993 DE 4331948
(71) Anmelder: DEGUSSA AKTIENGESELLSCHAFT, D-60311 Frankfurt (DE)
(72) Erfinder: Hagelüken, Christian, Dr. Dipl.-Wirtsch.-Ing., D-63457 Hanau (DE); Jung, Volker, Dr. Ing., D-63263 Neu-Isenburg (DE); Kleinwächter, Ingo, Dr. Dr. rer. nat., D-63457 Hanau (DE); Christiani, Joachim, D-52066 Aachen (DE); Wotruba, Hermann, Dr., D-52066 Aachen (DE); Bender, Matin, D-52064 Aachen (DE)

(57) **Zusammenfassung**

Zur Abtrennung der Platinmetalle aus Abgaskatalysatoren mit Metallträgern werden diese einer Ultraschallbehandlung in einem Flüssigkeitsbad unterworfen. Das vom Träger abgelöste Platinmetall/Oxidgemisch wird nach bekannten Verfahren aufgearbeitet.

## Beschreibung

Die Erfindung betrifft ein Verfahren zur Wiedergewinnung von Platinmetallen aus Fahrzeugabgaskatalysatoren, die auf mit Oxiden beschichteten Metallträgern aufgebracht sind, durch Abtrennung der Oxidschicht samt Platinmetallen von den Metallträgern und Aufarbeitung des Platinmetall/Oxid-Gemisches mittels bekannter Verfahren.

Bei den Abgaskatalysatoren im Fahrzeugbereich werden neuerdings im wachsenden Umfang anstelle von beschichteten Keramikträgern Metallträger eingesetzt. Sie bieten gegenüber den Keramikträgern den Vorteil einer höheren Temperaturwechselbeständigkeit, einer rascheren Aufheizung in der Kaltstartphase auf Betriebstemperatur und einer besseren mechanischen Festigkeit. Darüberhinaus benötigen die Metallträger einen geringeren Platzbedarf, was konstruktive Vereinfachungen zur Folge hat.

Im allgemeinen bestehen die Metallträger aus gewickelten, in sich gewellten Blechfolien, die in ebenfalls metallischen Zylindern befestigt sind. Auf diese ohnehin schon große Oberfläche wird zur Oberflächenvergrößerung und zum Schutz der Trägermetalle vor Oxydation eine Oxidpulver-Aufschlämmung, das sogenannte "washcoat" aufgebracht. Der Platinmetallkatalysator, der die Umwandlung der bei der Verbrennung der Treibstoffe entstehenden Schadstoffe in ungiftige Produkte beschleunigt, wird entweder dem "washcoat" zugesetzt, meist Aluminiumoxid, oder auf der Oxidschicht nachträglich abgeschieden. Im wesentlichen finden als Katalysatoren Platin und Rhodium, daneben auch noch Palladium Verwendung.

Die Wiedergewinnung dieser Platinmetalle aus den Abgaskatalysatoren ist von hoher wirtschaftlicher Bedeutung. Bei der herkömmlichen Rückgewinnung der Platinkatalysatoren mit keramischen Trägern werden diese zerkleinert oder aufgemahlen. Daran schließt sich ein naß- oder pyrometallurgisches Verfahren an, um die Platinmetalle möglichst vollständig zu extrahieren. Besonders letzteres Verfahren wird vielerorts mit Erfolg durchgeführt. Dabei wird der Träger samt Oxidschicht und Platinmetallen einem Schmelzprozeß unterworfen und die Keramik in Schlacke überführt.

Die Aufarbeitung und Wiedergewinnung der Platinmetalle erfolgt dann mit bekannten naßchemischen Verfahren.

Ein analoges pyrometallurgisches Verfahren zur Aufarbeitung von Abgaskatalysatoren mit Metallträgern ist nicht durchführbar, da eine Verschlackung der Metallträger mit einem hohen Platinmetallverlust verbunden wäre.

Aus der DE-PS 41 05 224 ist ein Verfahren zur Aufarbeitung von Abgaskatalysatoren mit Metallträgern bekannt, bei dem die Metallträger derart fein mechanisch zerkleinert werden, daß die Oxidschicht samt Platinmetalle vom Träger abplatzt und sehr feinkörnig vorliegt, so daß sie von den Metallträgerpartikeln separiert und daraus die Platinmetalle pyrometallurgisch oder naßchemisch aufgearbeitet werden können. Dieses Verfahren hat den Nachteil, daß durch das feine Zerkleinern des metallischen Trägers auch größere Mengen an Unedelmetallen in die Platinmetalle eingeschleppt werden, was zu Schwierigkeiten bei der Aufarbeitung der Platinmetalle führt.

Es war daher Aufgabe der vorliegenden Erfindung, ein Verfahren zur Wiedergewinnung von Platinmetallen aus Fahrzeugabgaskatalysatoren zu entwickeln, die auf mit Oxiden beschichteten Metallträgers aufgebracht sind, durch Abtrennung der Oxidschicht samt Platinmetallen von den Metallträgern und Aufarbeitung des Platinmetall/Oxid-Gemisches, wobei der Metallträger nicht fein zerkleinert werden sollte.

Diese Aufgabe wird erfindungsgemäß dadurch gelöst, daß zur Abtrennung der Oxidschicht und der Platinmetalle der Metallträger in ein Flüssigkeitsbad eingebracht und mit Ultraschall behandelt wird.

Vorteilhafterweise wird der Metallträger vor dem Einbringen in das Flüssigkeitsbad mechanisch grob zerkleinert.

Weiterhin ist es vorteilhaft mit Ultraschallfrequenzen von 20 bis 50 kHz zu arbeiten.

Das Ultraschallbad besteht aus einer mit Flüssigkeit gefüllten Wanne, in die durch entsprechende Sender Schallenergie im Ultraschallfrequenzbereich eingetragen wird. Durch den hochfrequenten Schallwechseldruck kommt es zu Kavitationen an den Oberflächen des zu behandelnden Materials. Die dadurch entstehenden Strömungskräfte separieren den washcoat von dem Trägermaterial.

Anschließend wird die Flüssigkeit mit dem suspendierten washcoat einer fest-flüssig-Trennung nach bekannten Verfahren unterzogen. Die weitere Aufarbeitung des washcoats zwecks Rückgewinnung der darin enthaltenen Platinmetalle erfolgt durch bekannte naßchemische oder pyrometallurgische Verfahren.

Der verbleibende Metallträger aus Edelstahl kann anschließend einer Schrottverwertung zugeführt werden.

Der Metallträger kann in beliebiger Form in das Ultraschallbad eingebracht werden, sowohl mit Ummantelung, als auch grob zerkleinert.

Folgendes Beispiel soll das erfindungsgemäße Verfahren näher erläutern:
53 g eines in Stücke von etwa 20 mm Durchmesser zerkleinerten Metallträgers aus Abgaskatalysatoren wurden in eine mit Wasser gefüllte Wanne von 520 mm Durchmesser gegeben. An diese Wanne wurde ein Ultraschallgerät angekoppelt, das mit einer Frequenz von 35 kHz arbeitete und eine Schalleistung von 2 x 1000 W in die Flüssigkeit einleitet. Der Anteil von washcoat und Platinmetall auf dem Träger betrug 6,4 %. Nach 10 Minuten wurden die Trägerteile aus dem Bad entfernt und der washcoat mit den Platinmetallen abfiltriert. Die Menge betrug 3,4 g, was praktisch einer 100%igen Ausbeute entspricht.

## Patentansprüche

1. Verfahren zur Wiedergewinnung von Platinmetallen aus Fahrzeugabgaskatalysatoren, die auf mit Oxiden beschichteten Metallträgern aufgebracht sind, durch Abtrennung der Oxidschicht samt Platinmetallen von den Metallträgern und Aufarbeitung des Platinmetall/Oxid-Gemisches,
**dadurch gekennzeichnet**,
daß zur Abtrennung der Oxidschicht und der Platinmetalle der Träger in ein Flüssigkeitsbad eingebracht und mit Ultraschall behandelt wird.

2. Verfharen nach Anspruch 1,
**dadurch gekennzeichnet**,
daß der Metallträger vor dem Einbringen in das Flüssigkeitsbad mechanisch zerkleinert wird.

3. Verfahren nach Anspruch 1 oder 2,
**dadurch gekennzeichnet**,
daß mit Ultraschallfrequenzen von 20 bis 50 kHz gearbeitet wird.
